# EUROPEAN PATENT APPLICATION

(11) **EP 4 632 480 A1**
(43) Date of publication of application: **15.10.2025**
(21) Application number: 23900988.9
(22) Date of filing: 27.11.2023
(51) Int. Cl.: G03B 17/02, G03B 5/06, H04N 23/55, H04N 23/54, H04N 23/51, F16F 1/36, G03B 30/00, G03B 17/12

(54) **CAMERA MODULE**

(30) Priority: 06.12.2022 KR 20220169211; 13.12.2022 KR 20220174253
(71) Applicant: LG INNOTEK CO., LTD., Seoul 07796 (KR)
(72) Inventor: HAN, Sang Yeon, Seoul 07796 (KR)
(74) Representative: DREISS Patentanwälte PartG mbB
(86) International application number: PCT/KR2023/019254
(87) International publication number: WO 2024/122969

(57) **Abstract**

A camera module according to an embodiment of the present invention comprises: a substrate; a base, which is disposed on the substrate and includes an opening; a lens barrel disposed on the substrate and the opening of the base; a holder disposed on the substrate and arranged inside the opening of the base; and a filter coupled to the holder, wherein the holder includes a damper member disposed at a position overlapping, in the direction of an optical axis, the lowest surface of the lens barrel.

## Description

### [Technical Field]

The present disclosure relates to a camera module.

### [Background Art]

Since it is difficult to apply the voice coil motor (VCM) technology used in conventional camera modules to ultra-small, low-power camera modules, research in this regard has been actively conducted.

In the case of camera modules mounted on small electronic devices such as smartphones, the camera module may frequently receive shocks during use, and may shake slightly due to the user's hand shaking while capturing. Considering this, technology to additionally install anti-shake means on the camera module has been developed recently.

### [Disclosure]

### [Technical Problem]

The technical problem that the present disclosure seeks to solve is to provide a miniaturized camera module.

### [Technical Solution]

In order to solve the above technical problem, a camera module according to an embodiment of the present disclosure includes a substrate; a base disposed on the substrate; a lens barrel disposed inside the base; a holder disposed on the substrate; and a filter disposed in the holder, in which the holder includes a damper member disposed on an upper surface thereof.

The base includes an opening through which the lens barrel passes, and the damper member may be positioned to contact a lower surface of the lens barrel according to movement of the lens barrel in the direction of an optical axis within the opening of the base.

The upper surface of the holder includes a recessed groove, and the damper member can be placed in the groove of the holder.

The damper member may be arranged at least partially spaced apart from the inner surface of the groove of the holder.

The holder includes a seating part on which the filter is placed, and an upper surface of the holder and the seating part may form a step.

The holder may include an inner surface connecting the upper surface and the seating part, an outer surface of the filter may face the inner surface of the holder, and the holder may include a recessed part recessed in the outer surface direction on the inner surface.

The base may include a first opening, the holder may be positioned below the first opening of the base, and the holder may include a second opening in which the filter is positioned opposite the first opening.

The camera module may include a housing disposed on the base; and a bobbin disposed inside the housing, in which the base includes an accommodation part that accommodates the holder therein, and the holder can be disposed spaced apart from each other inside the accommodation part of the base.

In order to solve the above technical problem, a camera module according to an embodiment of the present disclosure includes: a substrate; an image sensor disposed on the substrate; a lens driving device including a base disposed on the substrate, a housing disposed on the base, and a bobbin disposed in the housing and movable in the direction of an optical axis; a lens barrel disposed inside the bobbin; a holder disposed between the substrate and the base; and a filter disposed on the holder and facing the image sensor, in which a damper member is disposed on an upper surface of the holder, and the damper member may be formed of an adhesive.

The damper member includes a plurality of damper members spaced apart from each other and arranged on the upper surface of the holder, and the plurality of damper members can be arranged to face the lower surface of the lens barrel.

The damper member is arranged in a groove formed in a recess on the upper surface of the holder, and the damper member can be arranged at least partially spaced apart from the inner surface of the groove of the holder.

The damper member may include a groove dividing the upper surface into a plurality of regions.

In order to solve the above technical problem, a camera module according to an embodiment of the present disclosure includes: a substrate; a base disposed on the substrate and including an opening; a lens barrel disposed on the substrate and the opening of the base; a holder disposed on the substrate and within the opening of the base; and a filter coupled to the holder, in which the holder includes a damper member disposed at a position overlapping a lowermost surface of the lens barrel in the direction of an optical axis.

The holder includes a seating member to which the filter is coupled and a base member arranged on the outer side of the seating member, the seating member includes a protrusion protruding from an outer surface and a hole formed in the protrusion, and the damper member can be arranged in the hole of the seating member.

The base member includes a first recessed part that is recessed into an outer surface, and the damper member can be arranged within the first recessed part and spaced apart from an inner wall of the first recessed part.

The upper surface of the damper member may be positioned higher than the upper surface of the base member.

The height of the damper member may be greater than the height of the base member.

The camera module includes a cover member formed on the base and accommodating the lens barrel, the holder and the filter, in which the cover member is directly coupled with the base and may not be directly coupled with the holder.

The outer surface of the holder and the inner surface of the opening of the base can be spaced apart from each other.

The distance from the optical axis of the lens barrel to the damper member may be smaller than the distance from the optical axis to the inner surface of the opening of the base.

The camera module includes a housing disposed on the base; and a bobbin disposed inside the housing, in which the bobbin may include a stopper facing a part of the base on a lower surface.

The distance from the optical axis of the lens barrel to the stopper may be greater than the distance from the optical axis to the damper member.

The bobbin includes a bobbin opening penetrating the lens barrel, the bobbin does not overlap the damper member in the direction of an optical axis, and the bobbin opening can overlap the damper member in the direction of an optical axis.

The distance from the optical axis of the lens barrel to the inner wall of the bobbin opening may be greater than the distance from the optical axis to the damper member.

The damper member can come into contact with the lower surface of the lens barrel according to movement in the direction of an optical axis.

The damper member includes a plurality of dampers arranged in the holder, and the distances from the optical axis of the lens barrel to the plurality of dampers may be the same.

The holder can be positioned within an area defined by the opening of the substrate and the base.

The base and the holder can be overlapped in a direction perpendicular to the direction of an optical axis.

The lower surface of the lens barrel may not overlap the base in the direction of an optical axis.

The damper member may include a recessed groove in an upper surface thereof.

In order to solve the above technical problem, a camera module according to an embodiment of the present disclosure includes: a substrate; an image sensor disposed on the substrate; a lens driving device including a base disposed on the substrate and including an opening, a housing disposed on the base, and a bobbin disposed within the housing and movable in the direction of an optical axis; a lens barrel disposed within the bobbin; a holder disposed within the lens driving device; and a filter disposed on the holder and facing the image sensor, in which the holder includes a damper member disposed at a position facing a lowermost surface of the lens barrel, and the holder can be disposed in an area defined by the opening of the base and the substrate.

The bobbin of the lens driving device may overlap the holder in the direction of an optical axis of the lens barrel, and the base and the housing of the lens driving device may not overlap the holder in the direction of an optical axis.

The base of the lens driving device can overlap the holder in a direction perpendicular to the direction of an optical axis.

The holder includes a first recessed part that is recessed into an outer surface, and the damper member can be positioned within the first recessed part and spaced apart from an inner wall of the first recessed part.

The holder may include an inner surface connecting the upper surface and the surface on which the filter is placed, an outer surface of the filter may face the inner surface of the holder, and the holder may include a second recessed part recessed in the inner surface toward the outer surface.

The damper member may include a first groove dividing the upper surface into a plurality of regions.

The upper surface of the holder may include a first surface, a second surface opposite the first surface, a third surface, and a fourth surface opposite the third surface, and the damper member may include first and second damper members arranged at the center parts of the first surface and the second surface, third and fourth damper members arranged symmetrically around the center part of the third surface, and fifth and sixth damper members arranged symmetrically around the center part of the fourth surface.

The first to sixth damper members can be arranged to come into contact with the lower surface of the lens barrel according to movement of the lens barrel in the direction of an optical axis.

### [Advantageous Effect]

According to the present embodiments, the holder is arranged inside the base of the lens driving device, and the lower surface of the base is directly coupled to the upper surface of the circuit board, thereby reducing the height of the camera module.

In addition, by arranging a damper member in the holder, the shock caused by the movement of the lens barrel in the direction of an optical axis is absorbed, thereby preventing breakage of the filter and damage to the lens, thereby preventing a decrease in resolution.

In addition, a silicone material damper member can be implemented as an integral part by insert injection into the holder, thereby increasing the cushioning effect.

In addition, by applying a cross air vent design to the damper member, the phenomenon of the lens and lens barrel sticking to the silicone damper member can be prevented, and the attachment and detachment thereof can be made easy.

### [Description of Drawings]

FIG. 1 is an exploded view illustrating a camera module according to the present embodiment.
FIG. 2 is a perspective view illustrating the camera module of FIG. 1.
FIG. 3a is an exploded view illustrating a lens driving device according to an embodiment.
FIG. 3b is an exploded view illustrating a lens driving device according to another embodiment.
FIG. 3c is an exploded view illustrating a lens driving device according to another embodiment.
FIG. 3d is an exploded view illustrating a lens driving device according to another embodiment.
FIG. 4 is a cross-sectional view illustrating a camera module according to the first embodiment.
FIG. 5 is a perspective view illustrating a holder according to the first embodiment.
FIG. 6 is a view for explaining the arrangement of the holder and lens barrel according to the first embodiment.
FIG. 7a is a cross-sectional view illustrating a camera module according to the second embodiment.
FIG. 7b is a view illustrating a base and a holder arranged on a substrate according to the second embodiment.
FIG. 8 is a perspective view illustrating a holder according to the second embodiment.
FIG. 9 is a perspective view illustrating a seating member according to the second embodiment.
FIG. 10 is a perspective view illustrating a damper member according to the second embodiment.
FIG. 11 is a view illustrating a manufacturing process of a holder according to the second embodiment.
FIG. 12 is a view for explaining the arrangement of the holder and lens barrel according to the second embodiment.
FIG. 13 is a perspective view illustrating a portable terminal according to the present embodiment.
FIG. 14 is a configuration diagram illustrating the portable terminal illustrated in FIG. 13.

### [Best Mode]

Hereinafter, preferred embodiments of the present disclosure will be described in detail with reference to the attached drawings.

However, the technical idea of the present disclosure is not limited to some of the embodiments described, but can be implemented in various different forms, and within the scope of the technical idea of the present disclosure, one or more of the components among the embodiments can be selectively combined or substituted for use.

In addition, terms (including technical and scientific terms) used in the present embodiment can be interpreted as having a meaning that can be generally understood by a person having ordinary skill in the technical field to which the present embodiment belongs, unless explicitly and specifically defined and described, and terms that are commonly used, such as terms defined in a dictionary, can have their meanings interpreted in consideration of the contextual meaning of the relevant technology.

Additionally, the terms used in the present embodiments are for the purpose of describing the embodiments and are not intended to limit the present disclosure.

In this specification, the singular may also include the plural unless specifically stated otherwise in the phrase, and when it is described as "at least one (one or more) of A, B, C", it may include one or more of all combinations that can be combined with A, B, C.

In addition, in describing components of the present embodiment, terms such as first, second, A, B, (a), (b), or the like may be used. These terms are only intended to distinguish the components from other components, and are not intended to limit the nature, order, or sequence of the components.

In addition, when a component is described as being 'connected', 'coupled', or 'accessed' to another component, it may include not only cases where the component is 'connected', 'coupled', or 'accessed' directly to the other component, but also cases where the component is 'connected', 'coupled', or 'accessed' by another component between the component and the other component.

In addition, when described as being formed or arranged "above" or "below" each component, "above" or "below" includes not only the case where the two components are in direct contact with each other, but also the case where one or more other components are formed or arranged between the two components. In addition, when expressed as "above" or "below", the meaning of the downward direction as well as the upward direction based on one component may be included.

Hereinafter, a camera module according to an embodiment and an optical device including the same will be described as follows with reference to the attached drawings. For convenience of explanation, the camera module according to the embodiment will be described using a Cartesian coordinate system (x, y, z), but may be described using another coordinate system, and the embodiment is not limited thereto. In each drawing, the x-axis and the y-axis represent directions perpendicular to the z-axis, which is the optical axis (OA) direction, and the z-axis direction, which is the optical axis (OA) direction, may be referred to as the 'first direction', the x-axis direction may be referred to as the 'second direction', and the y-axis direction may be referred to as the 'third direction'.

The 'image stabilization function' applied to the camera module of a mobile device such as a smartphone or tablet PC may be a function that moves the lens in a direction perpendicular to the optical axis or tilts the lens relative to the optical axis to offset vibration (or movement) caused by the user's shaking hands.

In addition, the 'auto focusing function' may be a function that automatically focuses on a subject by moving the lens in the direction of the optical axis according to the distance to the subject to obtain a clear image of the subject on the image sensor.

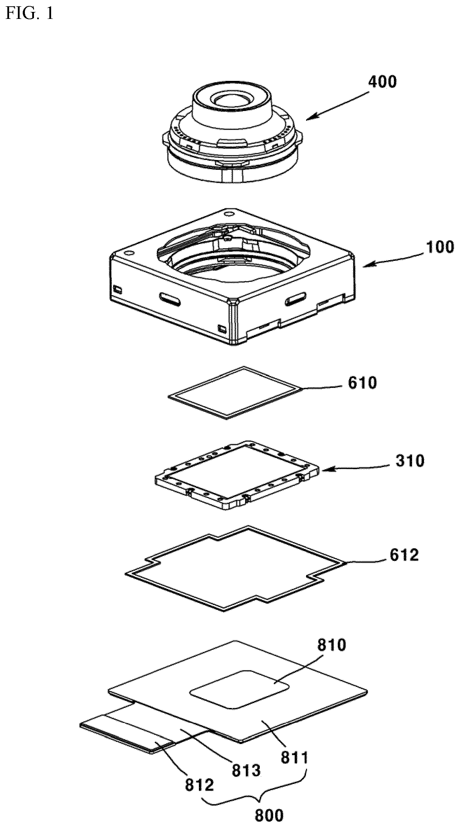

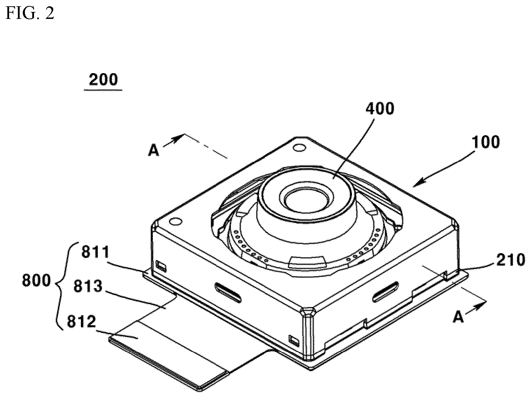

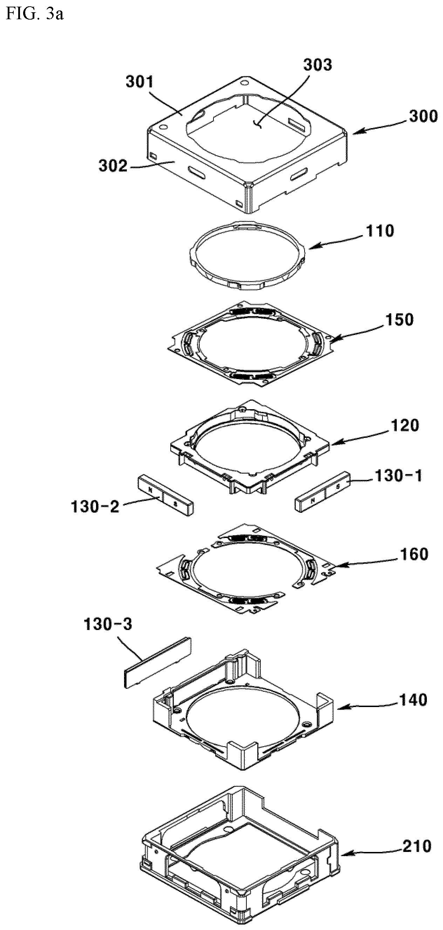

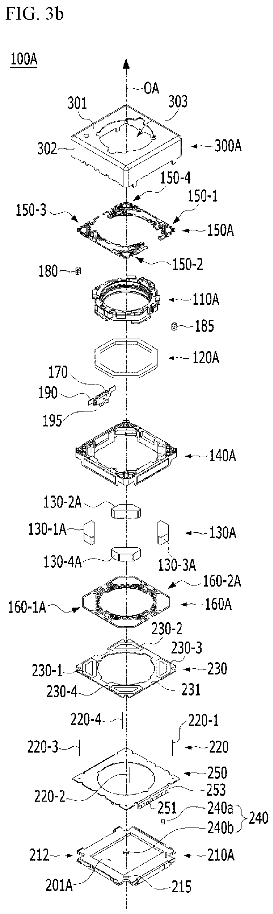

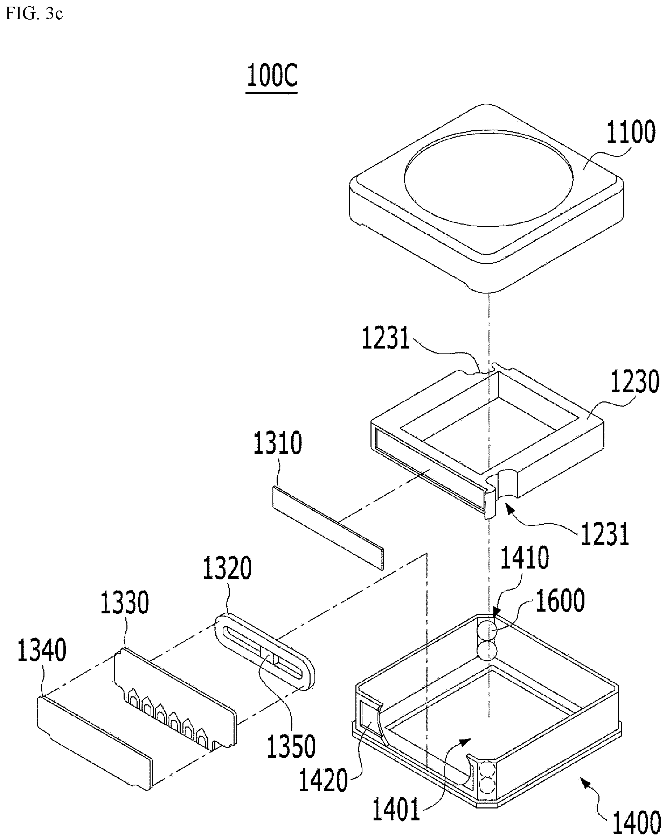

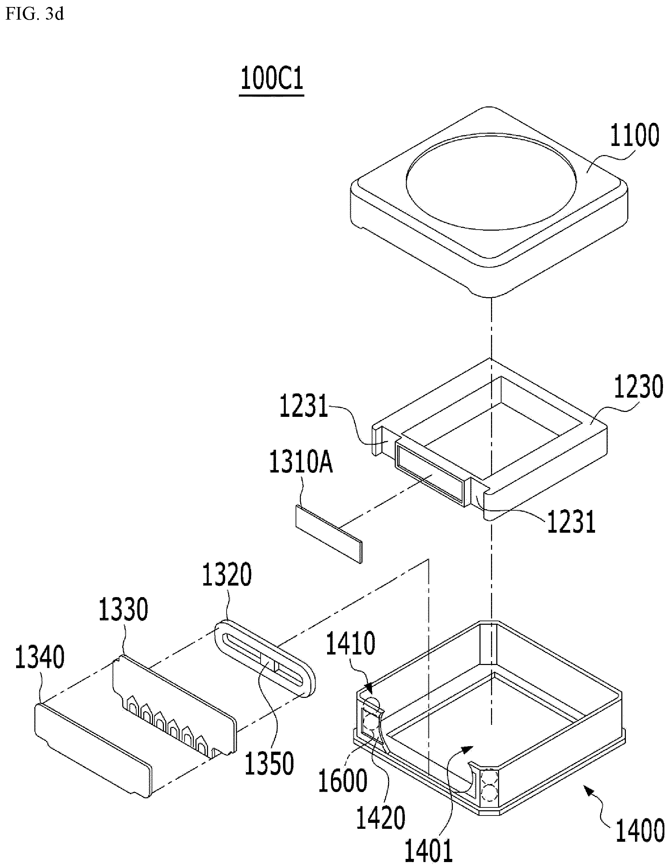

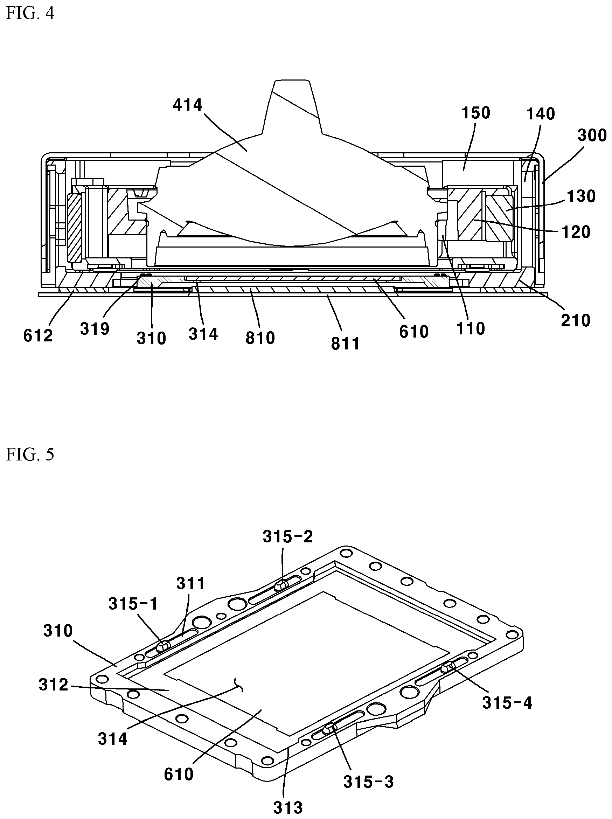

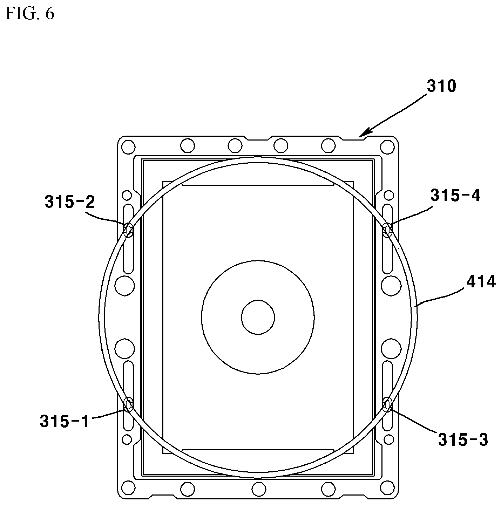

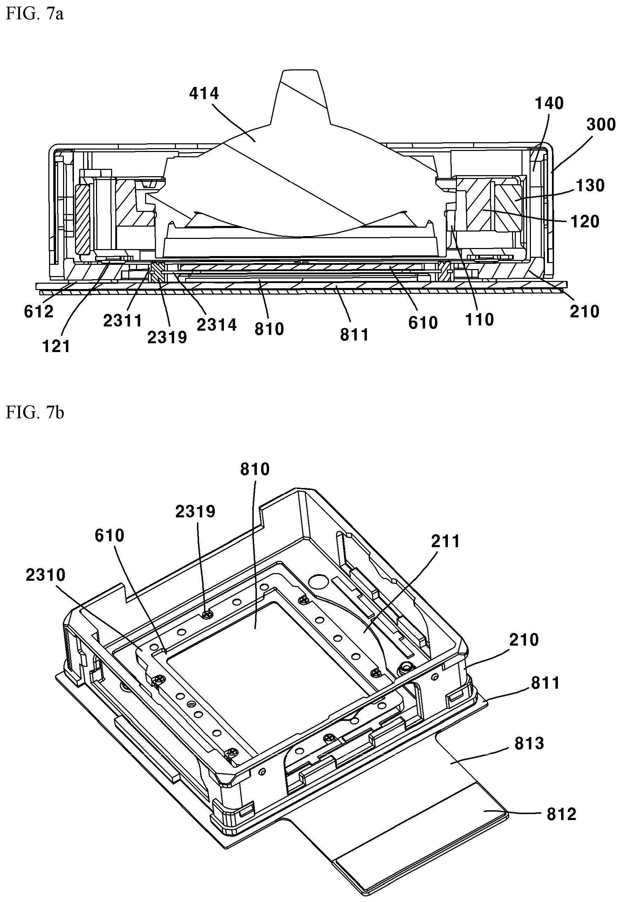

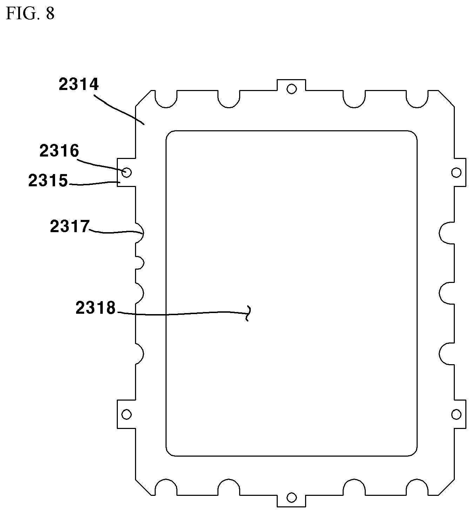

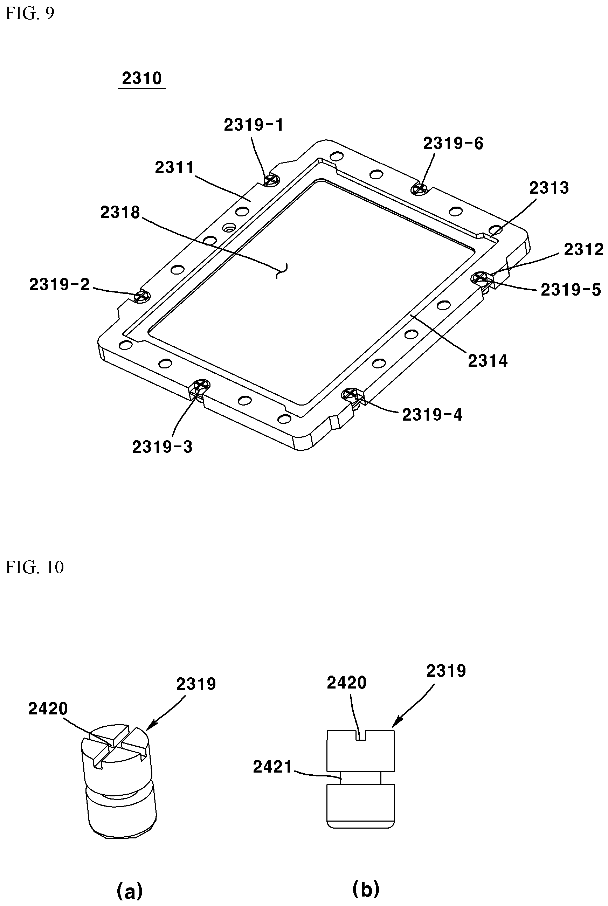

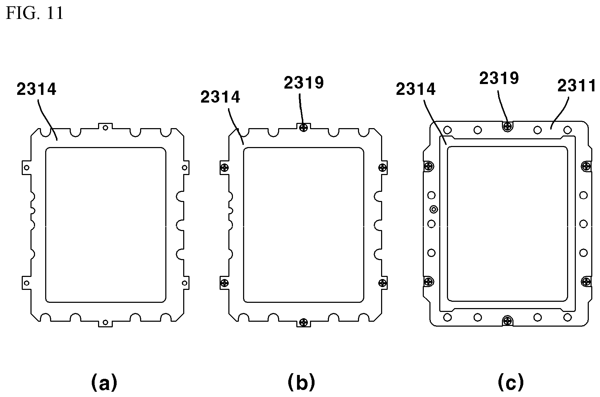

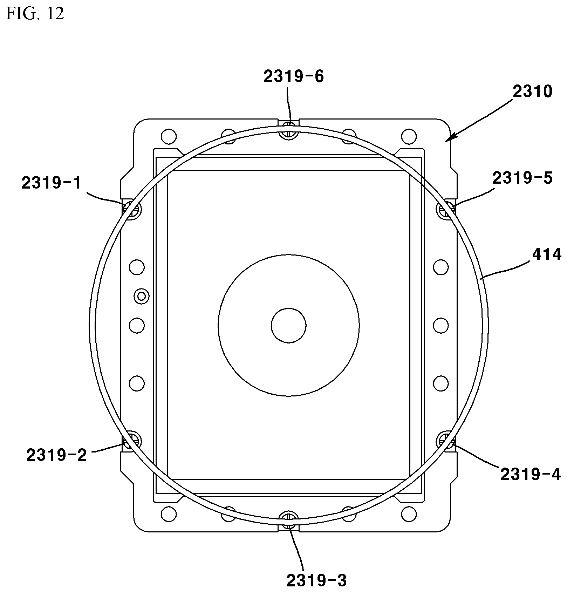

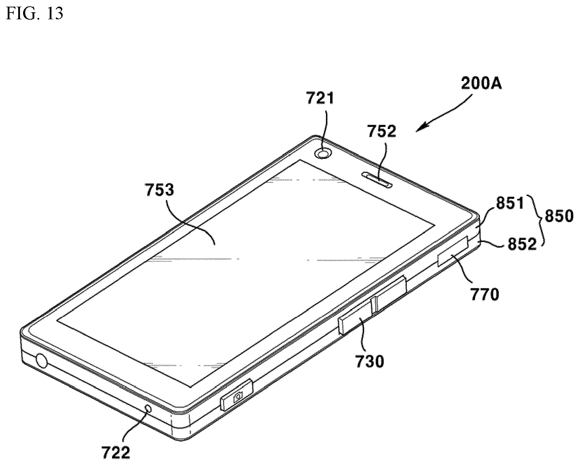

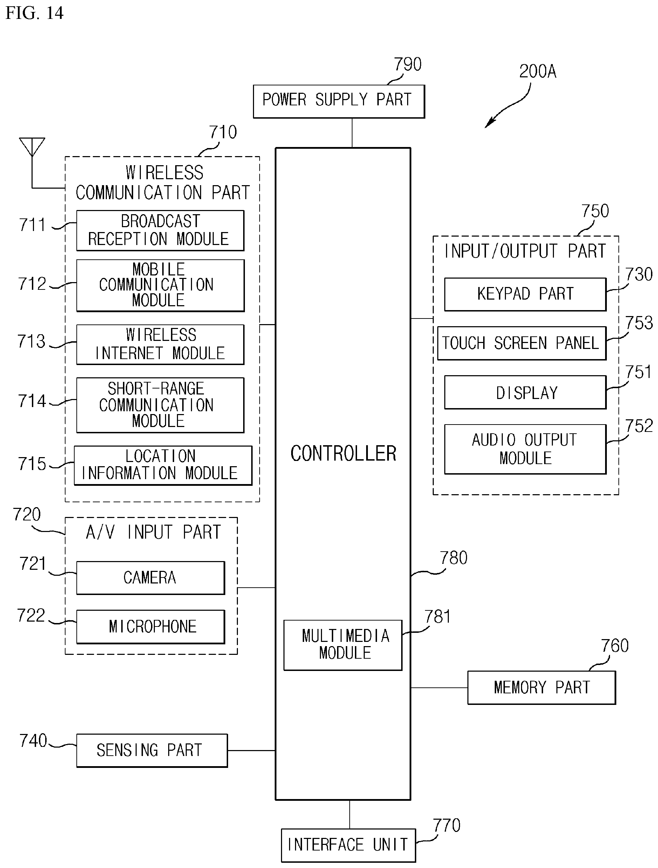

FIG. 1 is an exploded view illustrating a camera module according to the present embodiment, FIG. 2 is a perspective view illustrating the camera module of FIG. 1, FIG. 3a is an exploded view illustrating a lens driving device according to an embodiment, FIG. 3b is an exploded view illustrating a lens driving device according to another embodiment, FIG. 3c is an exploded view illustrating a lens driving device according to another embodiment, FIG. 3d is an exploded view illustrating a lens driving device according to another embodiment, FIG. 4 is a cross-sectional view illustrating a camera module according to the first embodiment.FIG. 5 is a perspective view illustrating a holder according to the first embodiment, FIG. 6 is a view for explaining the arrangement of the holder and lens barrel according to the first embodiment, FIG. 7a is a cross-sectional view illustrating a camera module according to the second embodiment, FIG. 7b is a view illustrating a base and a holder arranged on a substrate according to the second embodiment, FIG. 8 is a perspective view illustrating a holder according to the second embodiment, FIG. 9 is a perspective view illustrating a seating member according to the second embodiment, FIG. 10 is a perspective view illustrating a damper member according to the second embodiment, FIG. 11 is a view illustrating a manufacturing process of a holder according to the second embodiment, FIG. 12 is a view for explaining the arrangement of the holder and lens barrel according to the second embodiment, FIG. 13 is a perspective view illustrating a portable terminal according to the present embodiment, FIG. 14 is a configuration diagram illustrating the portable terminal illustrated in FIG. 13.

The camera module 200 may include a lens module 400, a lens driving device 100, a filter 610, a holder 310, a circuit board 800, and an image sensor 810.

The camera module 200 can capture at least one of an image and a video. The camera module 200 may be a camera assembly. The camera module 200 may be a camera part. The camera module 200 may include a lens driving device 100. The lens driving device 100 may drive the lens module 400 and move the lens module 400 in the direction of an optical axis. The lens module 400 may be expressed as a "lens," "lens part," or "lens assembly." The lens module 400 is coupled with the lens driving device 100 and may include at least one of a lens part or a lens barrel 414.

The camera module 200 may include a sensor drive device. The camera module 200 may include a voice coil motor (VCM). The camera module 200 may include an auto focus assembly. The camera module 200 may include an image stabilization assembly. The camera module 200 may include an auto focus device. The camera module 200 may include an image stabilization device. The camera module 200 may include an actuator. The camera module 200 may include a lens drive actuator. The camera module 200 may include a sensor drive actuator. The camera module 200 may include an auto focus actuator. The camera module 200 may include an image stabilization actuator.

The camera module 200 may include a circuit board 800. The circuit board 800 may be a main board. The circuit board 800 may be a printed circuit board (PCB). The circuit board 800 may be connected to a power source of the optical device. The circuit board 800 may include a connector connected to a power source of the optical device. The circuit board 800 may have circuit elements 95 (or electronic elements) arranged thereon. An adhesive member 612 may be included for coupling or attaching the lens driving device 100 and the circuit board 810.

The camera module 200 may include a base 210. The base 210 may be placed on a circuit board 800. The base 210 may be placed on the circuit board 800. The base 210 may be placed on top of the circuit board 800. The base 210 may be fixed to the circuit board 800. The base 210 may be coupled to the circuit board 800. The base 210 may be adhered to the circuit board 800 by an adhesive member 612.

The camera module 200 may include an image sensor 810. The image sensor 810 may be disposed on a circuit board 800. The image sensor 810 may be disposed between the circuit board 800 and the base 210. The image sensor 810 may be electrically connected to the circuit board 800. The image sensor 810 may be disposed below the lens module 16.

Light passing through the lens module 400 and the filter 610 may be incident on the image sensor 810 to form an image. The image sensor 810 may include an effective image region. The image sensor 810 may convert light irradiated onto the effective image region into an electrical signal. The image sensor 810 may include at least one of a CCD (charge coupled device), a MOS (metal oxide semi-conductor), a CPD, and a CID.

The camera module 200 may include a filter 610. The filter 610 may be placed between the lens part 412 and the image sensor 810. The filter 610 may be placed in the holder 310. The filter 610 may be placed in the window 318 of the holder 310. The filter 610 may block light of a specific frequency band from passing through the lens from being incident on the image sensor 810. The filter 610 may include an infrared cut-off filter (IRCF). The filter 610 may block infrared rays from being incident on the image sensor 810.

The lens driving device 100 illustrated in FIG. 3a is a lens driving device for AF, but the embodiment is not limited thereto. In another embodiment, the lens driving device may be a lens driving device for OIS. Here, the meanings of "for AF" and "for OIS" may be the same as those described in the AF camera module and the OIS camera module.

In addition, in FIG. 3a, the bobbin and the housing are supported by an elastic member, but are not limited thereto, and in other embodiments, the bobbin and the housing may be supported by a ball or a ball bearing.

Referring to FIG. 3a, the lens driving device 100 may include a housing 140, a bobbin 120 disposed within the housing 140 and for mounting a lens module 400, a coil 110 disposed in the bobbin 120, a magnet 130 disposed in the housing 140 and facing the coil 110, at least one upper elastic member 150 coupled to an upper part of the bobbin 120 and an upper part of the housing 140, at least one lower elastic member 160 coupled to a lower part of the bobbin 120 and a lower part of the housing 140, and a base 210. In another embodiment, the coil may be disposed in the housing, and the magnet may be disposed in the bobbin.

The lens driving device 100 may further include a cover member 300 which is coupled to the base 210 and provides a space for accommodating components of the lens driving device 100 together with the base 210. The cover member 300 may be a 'cover can' or a 'shield can'. The cover member may be formed of a metal material. The cover member 300 may block electromagnetic interference (EMI). The cover member 300 may be electrically connected to a circuit board 800. The cover member 300 may be grounded to the circuit board 800. The cover member 300 may include an upper plate 301, a side plate 302 connected to the upper plate 301, and an opening 303 formed in the upper plate 301.

The base 210 is positioned below the bobbin 120 (or housing 140). The housing 140 may be positioned on the base 210. The base 210 may be coupled with the housing 140. In another embodiment, the base 210 and the housing 140 may be formed integrally, and this configuration may be defined as a "base" or a "housing."

The base 210 may have an opening 201 corresponding to the opening of the bobbin 120 and/or the opening of the housing 140, and may have a shape that matches or corresponds to the cover member 300, for example, a square shape. The opening 201 of the base 210 may be in the form of a through-hole that penetrates the base 210 in the direction of the optical axis. A column part protruding toward the housing 140 may be formed on the upper surface of the base 210.

The base 210 may include a column part protruding upwardly at a predetermined height from each of the corners or corner parts. For example, the base 210 may include four column parts arranged at four corners. In other embodiments, the column parts may be omitted. The column parts of the base 210 may be inserted into, fastened to, or coupled to a groove formed at the lower part of the corner of the housing 140 by an adhesive material such as epoxy or silicone.

The coil 110 can be connected to at least one of the upper elastic member 150 and the lower elastic member 160. The lower elastic member 160 can include two lower elastic members and lower springs. The coil 110 can be connected to the two lower elastic members.

The upper elastic member 150 may include a first inner frame (or first inner part) coupled with the bobbin 120, a first outer frame (or first outer part) coupled with the housing 140, and a first connecting part connecting the first inner frame and the first outer frame. The lower elastic member may include a second inner frame (or second inner part) coupled with the bobbin 120, a second outer frame (or second outer part) coupled with the housing 140, and a second connecting part connecting the second inner frame and the second outer frame. One end of the coil **110** may be connected to the second inner frame of the first lower elastic member, and the other end of the coil 110 may be connected to the second inner frame of the second lower elastic member.

The first lower elastic member may include a first terminal, and the second lower elastic member may include a second terminal. A driving signal of the coil 110 may be input from the outside through the first and second terminals of the first and second lower elastic members.

The first terminal can be folded from the second outer frame of the first lower elastic member to the outer surface (or "first outer surface") of the base 210. The second terminal can be folded from the second outer frame of the second lower elastic member to the outer surface (or "first outer surface") of the base 210. At least a part of each of the first and second terminals can be arranged on the outer surface of the holder 310 and electrically connected to the circuit board 800.

The circuit board 800 can provide a driving signal to the coil 110 through the first and second terminals of the first and second lower elastic members, and can include pads (or terminals) electrically connected to the first and second terminals through solder or the like.

In other embodiments, the terminal may not be formed integrally with the lower elastic member, but may be separately disposed on the base 210, and the terminal and the outer frame of the lower elastic member may be coupled and electrically connected by solder or the like.

The coil 110 may be arranged on the outer surface of the bobbin 120. For example, the coil 110 may be wound in a ring shape on the outer surface of the bobbin 120, but is not limited thereto. A driving signal may be provided to the coil 110. The driving signal may be in the form of a current or a voltage, and may include at least one of a direct current signal or an alternating current signal.

The magnet 130 may be placed on the side of the housing 140. In another embodiment, the magnet may be placed on a corner or corner part of the housing. The magnet 130 may include a plurality of magnets 130-1 to 130-3, and the magnets 130 placed in the housing 140 may correspond to, face, or overlap the coil 110 in a direction perpendicular to the optical axis OA.

The movable part can be moved in the direction of the optical axis by the interaction between the magnet 130 and the coil 110 to which the driving signal is provided. By controlling the displacement of the bobbin 120 in the direction of the optical axis by the driving signal provided to the coil 110, AF driving can be implemented.

The movable part may include a bobbin 120 and a configuration coupled thereto. For example, the movable part may include a bobbin 120 and a coil 110. Additionally, for example, the movable part may further include a lens module 400.

For AF feedback driving, the lens driving device 100 of the camera module 200 may further include a sensing magnet (not illustrated) disposed on the bobbin, and an AF position sensor (for example, a hall sensor, not illustrated) disposed on the housing, the base, or the cover member and corresponding to, opposing, or overlapping the sensing magnet. The lens driving device 100 may further include an AF circuit board disposed on the housing 140 and on which the AF position sensor is mounted. In this case, the circuit board may be electrically connected to the coil 110 and the AF position sensor, and a driving signal may be provided to each of the coil 110 and the AF position sensor through the circuit board.

When the AF position sensor is implemented using only a Hall sensor, a driving signal may be provided from the outside to the circuit board, and the driving signal may be provided to the coil 110 through the circuit board and two elastic members connected to the circuit board.

When the AF position sensor is a driver IC including a Hall sensor, a driving signal may be provided from the AF position sensor to the circuit board, and the driving signal may be provided to the coil 110 through two elastic members connected to the circuit board.

The AF position sensor can output an output signal based on the result of detecting the strength of the magnetic field of the sensing magnet according to the movement of the bobbin 120, and the output of the AF position sensor can be transmitted to a circuit board and output to the outside through the circuit board.

In another embodiment, the AF position sensor may be arranged on the bobbin, and the sensing magnet may be arranged on the housing. Additionally, the lens driving device 100 may further include a balancing magnet arranged on the bobbin 120 and opposite the sensing magnet.

A camera module according to another embodiment may be coupled with a lens module 400 instead of the lens driving device 100 of FIG. 1, and may include a housing for fixing the lens module 400, and the housing may be coupled or attached to the upper surface of the circuit board 800.

The housing attached or fixed to the upper surface of the circuit board 800 does not move, and the position of the housing and the lens module coupled to the housing may be fixed while attached to the circuit board 800.

The lens driving device 100A illustrated in FIG. 3b may be a lens driving device for OIS.

Referring to FIG. 3b, the lens driving device 100A may include a housing 140A, a bobbin 120A disposed within the housing 140A and for mounting a lens module 400, a first coil 110A disposed on the bobbin 120A, a magnet 130A disposed on the housing 140A and facing the first coil 110A, at least one upper elastic member 150A coupled to the upper part of the bobbin 120A and the upper part of the housing 140A, at least one lower elastic member 160A coupled to the lower part of the bobbin 120A and the lower part of the housing 140A, a second coil 230 disposed under the housing 140A and/or the lower elastic member 160A, a circuit board 250 disposed under the second coil 230, and a base 210 disposed under the circuit board 250.

The lens driving device 100A may include a support member 220 connecting the upper elastic member 150A and the circuit board 250. The lens driving device 100A may include a sensing magnet 180 disposed on the bobbin 120A and a first position sensor 170 disposed on the housing 140. The lens driving device 100A may include a balancing magnet 185 disposed on the bobbin 120A.

The description of the bobbin 110, coil 120, magnet 130, housing 140, AF position sensor, sensing magnet, and balancing magnet of FIG. 3a can be applied to the embodiment of FIG. 3b.

The lens driving device 100A may include a circuit board 190 disposed in the housing 140A, and the circuit board 190 may be disposed on either side of the housing 140A. The first position sensor 170 may be disposed in the circuit board 190 and may be electrically connected to the circuit board 190. In addition, the description of the AF position sensor and the circuit board of FIG. 3a may be applied to the embodiment of FIG. 3b.

In addition, the lens driving device may further include a capacitor 195 arranged on the circuit board 190. The capacitor 195 may be connected in parallel to two input terminals of the first position sensor 170 for providing power or a driving signal, or two terminals of the circuit board 190 that are electrically connected to two input terminals of the first position sensor 170. The capacitor 195 may protect the first position sensor 170 from noise of high-frequency components or ESD, or the like introduced from the outside.

The upper elastic member 150A may include a plurality of upper elastic members 150-1 to 150-4. The plurality of elastic members may be electrically connected to the circuit board 190. For example, four upper elastic members 150-1 to 150-4 may be coupled to and electrically connected to corresponding one of the first to fourth terminals of the circuit board 190.

The first position sensor 170 may be implemented as a Hall sensor alone or may be in the form of a driver IC including a Hall sensor. The first position sensor 170 may include four terminals, and the four terminals of the first position sensor may be electrically connected to the first to fourth terminals of the circuit board 190.

The magnet 130A may include, but is not limited to, a plurality of magnets 130-1A to 130-4A arranged at corners of the housing 140A, and in other embodiments, the magnet may be arranged at the side of the housing 140A, as in FIG. 3a.

The support member 220 may include a plurality of support members 220-1 to 220-4. The support members 220-1 to 220-4 may be arranged at corner parts or corners of the housing 140A. A groove or hole may be formed at the corner of the housing 140 to avoid spatial interference with the support member 220, and the support member 200 may pass through the groove or hole.

One end of each of the plurality of support members 220-1 to 220-4 can be coupled to and electrically connected to a corresponding one of the plurality of upper elastic members 150-1 to 150-4. One end of each of the plurality of support members 220-1 to 220-4 can be coupled to and electrically connected to a circuit board 250 or a circuit member 231.

The circuit board 190 can be electrically connected to the circuit board 250 by a plurality of upper elastic members 150-1 to 150-4 and support members 220-1 to 220-4, and thus the first position sensor 170 can be electrically connected to the circuit board 250.

The lower elastic member 160 may include two lower elastic members 160-1A, 160-2A and may be electrically connected to the first coil 110A. The first coil 110A may be electrically connected to the circuit board 250 or the first position sensor 170. A driving signal may be supplied or transmitted to the first coil 120 from the first position sensor 170 or the circuit board 250.

The second coil 230 may be placed under the bobbin 120A and/or the housing 140A. For example, the second coil 230 may be placed under the magnet 130A. The second coil 230 may include coil parts 230-1 to 230-4 that face the magnets 130-1A to 130-4A placed in the housing 140A or overlap with them in the direction of an optical axis.

For example, the second coil 230 may include a circuit member 231 disposed on a circuit board 250 and a plurality of coil parts 230-1 to 230-4 formed on the circuit member 231. Here, the circuit member 231 may be expressed as a "board," a "circuit board," or a "coil board." In another embodiment, the second coil 230 may omit the circuit member 231 and include coil parts 230-1 to 230-4. The second coil 230 may be electrically connected to the circuit board 250 and may receive power or a driving signal from the circuit board 250.

By interaction between the magnets 130-1A to 130-4A and the second coils 230-1 to 230-4 provided with driving signals, the housing 140A can move in the second and/or third direction, for example, in the X-axis and/or Y-axis direction, thereby enabling image stabilization to be performed.

The circuit board 250 is placed on the upper surface of the base 210A and may have an opening corresponding to the opening of the bobbin 120A, the opening of the housing 140A, or/and the opening 201A of the base 210. The opening of the circuit board 250 may be a through-hole or a hollow hole.

The circuit board 250 may include a body having an opening and disposed on an upper surface of the base 210A, and at least one terminal surface 253 that is folded from the body to an outer surface of the base 210A. A plurality of terminals 251 for receiving electrical signals from the outside or transmitting electrical signals to the outside may be formed on the terminal surface 253 of the circuit board 250. The plurality of terminals 251 of the circuit board 250 may be electrically connected to at least one of the first coil 120, the first position sensor 170, the circuit board 190, the second position sensor 240, and the second coil 230.

The base 210A may include an opening 201A. The description of the base 210 of the embodiment of FIG. 3a may be applied to FIG. 3b. In another embodiment, the base 210A and the housing 140A may be formed integrally, and such a configuration may be defined as a "base" or a "housing." A corner of the base 210A may be formed with an escape part 212 in the form of a groove, a recess, or a hole to avoid spatial interference with the support member 220.

The lens driving device 100A may further include a second position sensor 240 electrically connected to the circuit board 250. The second position sensor 240 may include two sensors 240a, 240b and may be electrically connected to the circuit board 250. Each of the two sensors 240a, 240b may be implemented as a single position detection sensor, such as a Hall sensor, or may be implemented in the form of a driver including a Hall sensor. The base 210A may be provided with a groove 215 for accommodating the sensors 2140a, 240b.

Each of the sensors 240a, 240b can detect the strength of the magnetic field of the magnets 130-1A to 130-4A as the housing 140 moves in a direction perpendicular to the optical axis, and output an output signal according to the detected result. Displacement in a direction perpendicular to the optical axis of the housing 140A can be detected using the output signals of each of the sensors 240a, 240b, and the controller 830, 780 can perform OIS feedback shake correction using the output signals of the sensors 240a, 240b.

The lens driving device 100B illustrated in FIG. 3c may be a ball-type lens driving device.

Referring to FIG. 3c, the lens driving device 100B may include a housing 1400, a bobbin 1230 disposed within the housing 1400 and coupled with the lens module 400, a coil 1320 disposed in the housing 1400 and a magnet 1310 disposed in the bobbin 1230, a ball 1600 disposed between the housing 1400 and the bobbin 1230, and a yoke 1340 disposed in the housing 1400. The ball 1600 may also be expressed as a "ball member" or a "ball bearing".

The lens driving device 100B may include a cover member 1100 coupled with the housing 1400 to surround an outer surface of the housing 1400. The lens driving device 100B may include a position sensor 1350 disposed in the housing 1400. In addition, the lens driving device 100B may include a circuit board 1330 disposed in the housing 1400, and the position sensor 1350 may be mounted on the circuit board 1330 and electrically connected to the circuit board 1330. The description of the position sensor of FIGS. 3a and 3b may be applied to the position sensor 1350 of FIG. 3c.

The bobbin 1230 may have an opening for being coupled with a lens module, and the opening of the bobbin 1230 may be in the form of a through-hole penetrating the bobbin in the direction of the optical axis. The magnet 1310 may be arranged on the outer surface of the bobbin 1230. A groove may be formed on the outer surface of the bobbin 1230 for arranging the magnet 1310.

The coil 1320 may be placed on one side 1420 of the housing 1400 opposite the magnet 1310. For example, a groove may be formed on one side of the housing 1400 for placing the magnet 1310. In another embodiment, the magnet may be placed on the housing and the coil may be placed on the bobbin.

The housing 1400 may have an opening 1401 corresponding to the lens module 400, and the opening 1401 of the housing 140 may be in the form of a through-hole penetrating the housing 1400 in the direction of the optical axis.

The coil 1320 can be electrically connected to the circuit board 1330.

The ball 1600 can support the bobbin 1230 from moving relative to the housing 1400. At least a part of the ball 1600 can contact at least a part of the housing 1400 and at least a part of the bobbin 1230, thereby reducing friction between the housing 1400 and the bobbin 1230.

The yoke 1340 may be placed on one side of the housing 1400 and may face the magnet 1310 in a direction perpendicular to the optical axis. For example, the yoke 1340 may be placed on the outside of the circuit board 1330, and a coil 1320 may be placed between the yoke 1340 and the magnet 1310.

The yoke 1340 may be made of a material capable of generating an attractive force between the yoke and the magnet 1310, for example, a magnet or a metal, and accordingly, an attractive force may be applied between the yoke 1340 and the magnet 1310 in a direction perpendicular to the optical axis. By this attractive force, the ball 1600 may be maintained in contact with the bobbin 1230 and the housing 1400.

The housing 1400 may be formed with a first accommodation groove 1410 for receiving at least a part of the ball 1600 or for placing at least a part of the ball 1600. The bobbin 1230 may be formed with a second accommodation groove 1231 for receiving at least another part of the ball 1600 or for placing at least another part of the ball 1600.

The first accommodation groove 1410 may be formed on the inner side or inner surface of at least one corner of the housing 1400, and the second accommodation groove 1231 may be formed on the outer side or outer surface of at least one corner of the bobbin 1230. The first accommodation groove 1410 and the second accommodation groove 1231 may face or oppose each other, and the ball 1600 may be arranged between the first accommodation groove 1410 and the second accommodation groove 1231 and may come into contact with each of the first accommodation groove 1410 and the second accommodation groove 1231. The number of balls 1600 arranged between the first accommodation groove 1410 and the second accommodation groove 1231 may be one or more.

In FIG. 3c, a first accommodation groove may be formed at each of two corners of the housing 1400 that are positioned facing or opposite to each other, and a second accommodation groove may be formed at each of two corners of the bobbin 1230 that correspond to the two corners of the housing 140.

In another embodiment, a first accommodation groove may be formed at each of the four corners of the housing 1400, and a second accommodation groove may be formed at each of the four corners of the bobbin 1230 corresponding to the four corners of the housing 140.

In another embodiment, a first accommodation groove may be formed at each of two corners of the housing 1400 adjacent to the side 1420 of the housing 1400 in which the coil 1320 and/or the circuit board 1330 are placed.

Additionally, a second accommodation groove may be formed at each of two corners of the bobbin 1230 corresponding to two corners of the two housings 1400 adjacent to the side 1420 of the housing 1400.

In another embodiment, a first accommodation groove may be formed at each of two corners adjacent to a side positioned on the opposite side 1420 of the housing 1400. A second accommodation groove may be formed at each of two corners of the bobbin 1230 corresponding to the two corners adjacent to a side positioned on the opposite side 1420 of the housing 1400.

As illustrated in FIG. 3c, the housing 1400 may be implemented as a single body, but is not limited thereto. In another embodiment, the housing 1400 may include a housing and a base coupled to the housing, as in FIGS. 3a and 3b. In this case, the base may have an opening that is the same as or similar to the opening 1401 of the housing 1400.

For the convenience of the following description, the base 210 of the lens driving device 100 is described as an example, but is not limited thereto. The following description can also be applied or analogically applied to the base 210A of the lens driving device 100A and the housing 1400 of the lens driving device 100B.

FIG. 3d may be a modified embodiment 100C of FIG. 3c.

In FIG. 3d, the ball 1600 can be placed between two corners adjacent to the side 1420 of the housing 1400 where the coil 1320 and/or the circuit board 1330 are placed and the corresponding outer surface of the bobbin 1230.

For example, in FIG. 3d, the first accommodation groove 1410 may be formed at each of two corners of the housing 1400 adjacent to the side 1420 of the housing 1400 where the coil 1320 and/or the circuit board 1330 are placed, and the second accommodation groove 1231 may be formed at corners of the bobbin 1230 corresponding to the two corners of the housing 1400.

The magnet 1310A may be placed between balls 1600 accommodated in second accommodation grooves 1231 formed at two corners of the bobbin 1230. For example, the magnet 1310A may be placed between two second accommodation grooves 1231 formed at two corners of the bobbin 1230.

FIG. 4 is a cross-sectional view illustrating a camera module according to the present embodiment, FIG. 5 is a perspective view illustrating a holder according to the present embodiment, and FIG. 6 is a view for explaining the arrangement of the holder and lens barrel according to the present embodiment.

The holder 310 may be placed on the upper surface of the substrate 811. The holder 310 may be placed on the inner side of the base 210. The holder 310 may be placed spaced apart from each other inside the base 210. The holder 310 may be expressed as a filter holder or an inner base. The holder 310 may be placed inside the opening of the base 210 of the lens driving device 100 or the opening of the housing 140. The holder 310 may be placed under the lens module 400.

In the lens driving device 100 illustrated in FIG. 3a and the lens driving device 100A illustrated in FIG. 3b, the holder 310 may be placed inside the base 210, 210A. In the lens driving device 100B illustrated in FIG. 3c and the lens driving device 100C illustrated in FIG. 3d, the holder 310 may be placed inside the housing 1400. Although the base is not illustrated in FIGS. 3c and 3d, a base may be additionally placed between the housing 1400 and the substrate 811. In this case, the holder 310 may be placed inside the opening of the base.

The base 210, 210A may include an accommodation part that accommodates a holder 310 therein. The holder 310 may be spaced apart and placed within the accommodation part of the base 210, 210A. The accommodation part of the base 210, 210A may mean a space in which the holder 310 is placed. The inner surface of the base 210, 210A may face the outer surface of the holder 310.

The base 210, 210A may include an opening through which the lens barrel 414 passes. The lens barrel 414 may pass through the opening of the base 210, 210A according to movement in the direction of an optical axis. When the lens barrel 414 moves closest to the image sensor 810, it may pass through the opening of the base 210, 210A, and when the lens barrel 414 moves farthest from the image sensor 810, it may not pass through the opening of the base 210, 210A.

The holder 310 may include an opening 314 corresponding to the image sensor 810. The holder 310 may include an opening 314 corresponding to the filter 610. The size of the opening 314 of the holder 310 may be formed smaller than the size of the filter 610. The opening 314 of the holder 310 may be located below the opening 201 of the base 210 and may face the opening 201 of the base 210 or/and the lens module 400 in the direction of an optical axis. The opening 314 of the holder 310 may penetrate the holder 310 in the direction of an optical axis and may be expressed as a window, a hole, a hollow, or a through-hole. The opening 314 can pass through the center of the holder 310 and can be positioned to correspond to or face an active region of the image sensor 810. The opening 314 of the holder 310 can correspond to or face an opening of the base 210 or an opening of the housing 140. The size or area of the opening 314 of the holder 310 can be smaller than the size or area of the opening of the base 210 or the opening of the housing 140.

The holder 310 may include a seating part 312 on which a filter 610 is placed. The seating part 312 may form a step with an upper surface of the holder 310. The seating part 312 may be placed lower than the upper surface of the holder 310. The seating part 312 may be formed to extend inwardly of an opening of the holder 310. The holder 310 may include an inner surface connecting the upper surface and the seating part 312. When the filter 610 is placed in the seating part 312, an outer surface of the filter 610 may face an inner surface of the holder 310.

The holder 310 may include a recessed part 313 recessed from an edge of an inner surface connecting the upper surface and the seating part 312. The holder 310 may include a recessed part 313 recessed from the seating part 312 toward the outer surface. The recessed part 313 may prevent an adhesive, such as UV epoxy, for attaching the filter 610 to the seating part 312 from overflowing.

The upper surface of the holder 310 may include a recessed groove. The groove of the holder 310 may be formed in multiple numbers. The groove of the holder 310 may be a region formed when a pin attached to an injection mold is coupled to push out a product during injection molding. The groove of the holder 310 may be formed at a location where an ejector pin is attached.

The home of the holder 310 may be a dust trap 311. The dust trap 311 may be referred to as a contaminant collection unit. The dust trap 311 may be formed by being recessed into a circular shape. The dust trap 311 may be formed by being recessed into an oval shape. The dust trap 311 may collect foreign matter flowing in from the lens driving device.

The holder 310 may include a damper member 315 disposed on the upper surface. The damper member 315 may be disposed in the dust trap 311. The damper member 315 may be disposed in a recessed groove on the upper surface of the holder 310. The groove of the dust trap 311 or the holder 310 may serve to guide the position where the damper member 315 is disposed. When the damper member 315 is disposed in the groove of the dust trap 311 or the holder 310, a free space in which the damper member 315 can expand may be formed between the damper member 315 and the dust trap 311 or the groove in order to absorb and cushion shock when colliding with the lower surface of the lens barrel 414.

The damper member 315 may be a hardened epoxy composition. The damper member 315 may be formed of an elastic material. The damper member 315 may be formed of a material that absorbs shock as a buffer member. The damper member 315 may be made of a silicone material and may be attached to the upper surface of the holder 310 with an adhesive.

The damper member 315 absorbs shock caused by movement in the direction of an optical axis of the lens barrel 414, thereby preventing breakage of the filter 610 and damage to the lens 412, thereby preventing a decrease in resolution.

The upper surface of the holder 310 may include a first surface, a second surface opposite the first surface, a third surface, and a fourth surface disposed opposite the third surface. The damper member 315 may include first and second damper members 315-1, 315-2 and third and fourth damper members 315-3, 315-4 disposed on both sides symmetrically with respect to the center part of the first surface and the second surface. The damper member 315 may be disposed on the center part of the first surface and the second surface, and may be disposed on both sides symmetrically with respect to the center part of the third surface and the fourth surface. The damper member 315 may be disposed on the center part of each of the first to fourth surfaces.

The damper member 315 may be arranged to contact the lower surface of the lens barrel 414 as the lens barrel 414 moves in the direction of an optical axis. The damper member 315 may be arranged to overlap the lens barrel 414 in the direction of an optical axis. The damper member 315 may be arranged to overlap the lower surface of the lens barrel 414 in the direction of an optical axis. The damper member 315 may be arranged to face the lower surface of the lens barrel 414. The damper member 315 may be arranged to contact the lower surface of the lens barrel 414 as the lens barrel 414 moves in the direction of an optical axis within the opening of the base 210, 210A.

The upper surface of the damper member 315 may have a groove formed. The groove of the damper member 315 may be formed in a cross (+) shape on the upper surface. The groove of the damper member 315 may facilitate attachment and detachment when in contact with the lower surface of the lens barrel 414. The groove of the damper member 315 may serve to partition the upper surface of the damper member 315 so that the damper member 315 is easily attached and detached while securing an area in contact with the lower surface of the lens barrel 414 and the damper member 315. The groove of the damper member 315 may be formed in various shapes, such as a circular shape or a star shape that is recessed in at the center of the upper surface.

As described above, the camera module according to the first embodiment of the present disclosure has been described with reference to FIGS. 4 to 6. Hereinafter, the camera module according to the second embodiment of the present disclosure will be described with reference to FIGS. 7 to 12. The detailed description of the camera module according to the second embodiment of the present disclosure is based on the names, terms, and functions of the camera module according to the first embodiment of the present disclosure and the detailed descriptions of each embodiment, and may be the same as or different from each other.

FIG. 10 is a cross-sectional view illustrating a camera module according to the present embodiment, FIG. 7b is a drawing illustrating a base and a holder arranged on a substrate according to the present embodiment, FIG. 8 is a perspective view illustrating a holder according to the present embodiment, FIG. 9 is a perspective view illustrating a seating member according to the present embodiment, FIG. 10 is a perspective view illustrating a damper member according to the present embodiment, FIG. 11 is a view illustrating a manufacturing process of a holder according to the present embodiment, and FIG. 12 is a view for explaining the arrangement of a holder and a lens barrel according to the present embodiment.

The holder 2310 may be placed on the upper surface of the substrate 811. The holder 2310 may be placed on the inner side of the base 210. The holder 2310 may be placed spaced apart from each other inside the base 210. The holder 2310 may be placed inside the opening 211 of the base 210. The outer surface of the holder 2310 and the inner surface of the opening 211 of the base 210 may be placed spaced apart from each other. The holder 2310 may be placed inside the lens driving device. The holder 2310 may be placed in a region defined by the opening 211 of the base 210 and the substrate 811. The holder 2310 may also be expressed as a filter holder or an inner base. The holder 2310 may be placed inside the opening of the base 210 of the lens driving device 100 or the opening of the housing 140. The holder 2310 may be placed under the lens module 400. The holder may include a cover member 300 formed on the base 210 and accommodating the lens barrel 414, the holder 2310, and the filter 610. The cover member 300 may be directly coupled with the base 210 and may not be directly coupled with the holder 2310.

In the lens driving device 100 illustrated in FIG. 3a and the lens driving device 100A illustrated in FIG. 3b, the holder 2310 may be placed inside the base 210, 210A. In the lens driving device 100B illustrated in FIG. 3c and the lens driving device 100C illustrated in FIG. 3d, the holder 2310 may be placed inside the housing 1400. Although the base is not illustrated in FIGS. 3c and 3d, a base may be additionally placed between the housing 1400 and the substrate 811. In this case, the holder 2310 may be placed inside the opening of the base.

The bobbin 120 of the lens driving device 100 can overlap the holder 2310 in the direction of an optical axis of the lens barrel 414. The base 210 and the housing 140 of the lens driving device 100 can not overlap the holder 2310 in the direction of an optical axis. The base 210 of the lens driving device 100 can overlap the holder 2310 in a direction perpendicular to the direction of an optical axis.

The base 210, 210A may include an accommodation part that accommodates a holder 2310 therein. The holder 2310 may be spaced apart and placed within the accommodation part of the base 210, 210A. The accommodation part of the base 210, 210A may mean a space in which the holder 2310 is placed. The inner surface of the base 210, 210A may face the outer surface of the holder 2310.

The base 210, 210A may include an opening 211 through which the lens barrel 414 passes. The lens barrel 414 may pass through the opening 211 of the base 210, 210A according to movement in the direction of an optical axis. When the lens barrel 414 moves closest to the image sensor 810, the lens barrel may pass through the opening 211 of the base 210, 210A, and when the lens barrel 414 moves farthest from the image sensor 810, the lens barrel may not pass through the opening of the base 210, 210A.

The bobbin 120 may include a bobbin opening penetrating the lens barrel 414. The bobbin 120 may include a stopper 121 facing a part of the base 210 on a lower surface. The bobbin 120 may not overlap the damper member 2319 in the direction of an optical axis. The bobbin opening may overlap the damper member 2319 in the direction of an optical axis. A distance from the optical axis of the lens barrel 414 to the stopper 121 in the direction perpendicular to the optical axis may be greater than a distance from the optical axis to the damper member 2319. A distance from the optical axis of the lens barrel 414 to an inner wall of the bobbin opening in the direction perpendicular to the optical axis may be greater than a distance from the optical axis to the damper member 2319.

The holder 2310 may include a base member 2311, a seating member 2314 coupled to the base member 2311, and a damper member 2319. The base member 2311 and the seating member 2314 may be formed of separate components. When the base member 2311 and the seating member 2314 are formed of separate components, the base member 2311 and the seating member 2314 may be formed of different materials. The base member 2311 may be formed of a plastic material, and the seating member 2314 may be formed of a metal material. The base member 2311 and the seating member 2314 may be formed of a single component. When the base member 2311 and the seating member 2314 are formed of an integrated component, they may be formed of the same material. The holder 2310 may be configured by injection molding in which a seating member 2314 is inserted into a base member 2311. The holder 2310 may be configured by injection molding in which a damper member 2319 and a seating member 2314 are inserted into a base member 2311.

The base member 2311 may include an opening 2318 corresponding to the image sensor 810. The base member 2311 may include an opening 2318 corresponding to the filter 610. The size of the opening 2318 of the base member 2311 may be formed smaller than the size of the filter 610. The opening 2318 of the base member 2311 may be located below the opening 201 of the base 210 and may face the opening 201 of the base 210 or/and the lens module 400 in the direction of an optical axis. The opening 2318 of the base member 2311 may penetrate the base member 2311 in the direction of an optical axis and may be expressed as a window, a hole, a hollow, or a through-hole. The opening 2318 can pass through the center of the base member 2311 and can be positioned to correspond to or face an active region of the image sensor 810. The opening 2318 of the base member 2311 can correspond to or face an opening of the seating member 2314, an opening of the base 210, or an opening of the housing 140. The size or area of the opening 2318 of the base member 2311 can be smaller than the size or area of the opening of the base 210 or the opening of the housing 140.

The base member 2311 may include a first recessed part 2312 recessed from an outer edge. The base member 2311 may include a first recessed part 2312 recessed from an outer surface. The base member 2311 may include a first recessed part 2312 penetrating from an upper surface to a lower surface. The first recessed part 2312 may be a region for placing a damper member 2319 that is disposed to penetrate the seating member 2314. The damper member 2319 may be placed within the first recessed part 2312 and spaced apart from an inner wall of the first recessed part 2312. The first recessed part 2312 may be formed to correspond to a shape of the damper member 2319. For example, when the upper surface of the damper member 2319 is formed in a circular shape, the inner surface of the first recessed part 2312 may be formed as a curved surface having a curvature. The first recessed part 2312 may be formed in a hole shape.

The upper surface of the base member 2311 may include a first surface having a relatively short length in the longitudinal direction, a second surface opposite the first surface, a third surface having a relatively long length in the longitudinal direction, and a fourth surface opposite the third surface. The first and second surfaces of the base member 2311 may have a first recessed part 2312 formed in the central part. The third and fourth surfaces of the base member 2311 may have a first recessed part 2312 formed symmetrically with respect to an imaginary line dividing the third surface into two in the longitudinal direction. When the first to fourth surfaces of the base member 2311 are formed with the same length, the first recessed part 2312 may be formed in the central part of each surface. This is merely exemplary, and the first recessed part 2312 of the base member 2311 may be formed in a region that overlaps the lower surface of the lens barrel 414 in the direction of an optical axis.

The base member 2311 can include a second recessed part 2313 recessed from an inner edge. The base member 2311 can include a second recessed part 2313 recessed from an inner surface of the opening. The base member 2311 can include a second recessed part 2313 recessed from an inner surface of the opening toward an outer surface. The second recessed part 2313 can prevent an adhesive, such as UV epoxy, for attaching the filter 610 to the seating member 2314 from overflowing.

The upper surface of the base member 2311 may include a recessed groove. The groove of the base member 2311 may be formed in multiple numbers. The groove of the base member 2311 may be a region formed when a pin attached to an injection mold is coupled to push out a product during injection molding. The groove of the base member 2311 may be formed at a position where an ejector pin is attached. The groove of the base member 2311 may be a dust trap. The dust trap may be referred to as a dust trap. The dust trap may collect foreign matter flowing in from a lens driving device.

The seating member 2314 may include an opening corresponding to the image sensor 810. The size of the opening of the seating member 2314 may be formed smaller than the size of the opening 2318 of the base member 2311. The size of the opening of the seating member 2314 may be formed smaller than the size of the filter 610. The opening of the seating member 2314 may be formed to correspond to the opening of the base member 2311. The opening of the seating member 2314 may be located below the opening 201 of the base 210 and may face the opening 201 of the base 210 or/and the lens module 400 in the direction of an optical axis. The opening of the seating member 2314 can penetrate the seating member 2314 in the direction of the optical axis, and can be expressed as a window, a hole, a hollow, or a through-hole instead. The opening can penetrate the center of the seating member 2314 and can be arranged to correspond to or face an active region of the image sensor 810. The opening of the seating member 2314 can correspond to or face an opening 2318 of the base member 2311, an opening of the base 210, or an opening of the housing 140. The size or area of the opening 2318 of the seating member 2314 can be smaller than the size or area of the opening of the base 210 or the opening of the housing 140.

The seating member 2314 may include a protrusion 2315 protruding from an outer edge. The base member 2311 may include a protrusion 2315 protruding from an outer surface. The protrusion 2315 may be formed at a position corresponding to the first recessed part 2312 of the base member 2311. The protrusion 2315 may include a hole 2316 penetrating from an upper surface to a lower surface. The hole 2316 may be an area into which a damper member 2319 is inserted and placed. The hole 2316 may be formed corresponding to the shape of the damper member 2319. For example, when the damper member 2319 is formed in a cylindrical shape, the hole 2316 may be formed in a circular shape.

The upper surface of the seating member 2314 may include a first surface having a relatively short length in the longitudinal direction, a second surface opposite the first surface, a third surface having a relatively long length in the longitudinal direction, and a fourth surface opposite the third surface. The first and second surfaces of the seating member 2314 may have a protrusion 2315 and a hole 2316 formed in the central part. On the third and fourth sides of the seating member 2314, a protrusion 2315 and a hole 2316 can be formed symmetrically based on an imaginary line dividing the lengthwise portion into two. When the first to fourth surfaces of the seating member 2314 are formed with the same length, the protrusion 2315 and the hole 2316 may be formed in the central part of each surface. This is merely an example, and the protrusion 2315 and hole 2316 of the seating member 2314 may be formed in a region overlapping the lower surface of the lens barrel 414 in the direction of the optical axis.

The seating member 2314 may include a recessed part 2317 recessed from an outer edge. The recessed part 2317 of the seating member 2314 may be a region for avoiding a groove formed on an upper surface of the base member 2311. Since the groove of the base member 2311 is formed when a pin attached to a mold is coupled during injection molding, the recessed part 2317 of the seating member 2314 may be a region formed to minimize stress generated when the injection molding material of the base member 2311 expands.

The damper member 2319 may be formed in a cylindrical shape. The damper member 2319 may be formed in a hexahedral shape. The damper member 2319 may be formed of a silicone material. The damper member 2319 may be formed of an elastic material. The damper member 2319 may be formed of a material that absorbs shock as a buffer member. The damper member 2319 may be placed in the hole 2316 of the seating member 2314. The damper member 2319 may be coupled to the hole 2316 of the seating member 2314. The damper member 2319 may be placed in the hole 2316 of the seating member 2314 and the first recessed part 2312 of the base member 2311 so as to be exposed on the upper surface of the holder 2310. The damper member 2319 may be placed within the first recessed part 2312. The damper member 2319 may be placed within the first recessed part 2312 and spaced apart from the inner wall of the first recessed part 2312.

The damper member 2319 absorbs shock caused by movement in the direction of an optical axis of the lens barrel 414, thereby preventing breakage of the filter 610 and damage to the lens 412, thereby preventing a decrease in resolution.

The damper member 2319 may include first and second damper members 2319-3, 2319-6 arranged at the center parts of the first and second surfaces of the holder 2310, and may include third and fourth damper members 2319-1, 2319-2 and fifth and sixth damper members 2319-4, 2319-5 arranged on both sides symmetrically with respect to the center part on the third and fourth surfaces of the base member 2311. The damper member 2319 may be arranged at the center parts of the first and second surfaces of the base member 2311, and may be arranged on both sides symmetrically with respect to the center part on the third and fourth surfaces of the base member 2311.

The damper member 2319 may be arranged at the center part of the first to fourth surfaces of the base member 2311. The damper member 2319 may be arranged at the center part of the first and second surfaces of the seating member 2314, and may be arranged on both sides of the third and fourth surfaces to be symmetrical with respect to the center part. The damper member 2319 may be arranged at the center part of the first to fourth surfaces of the seating member 2314. The damper member 2319 may be arranged to contact the lower surface of the lens barrel 414 according to the movement of the lens barrel 414 in the direction of an optical axis. The damper member 2319 may be arranged to overlap the lens barrel 414 in the direction of an optical axis. The damper member 2319 may be arranged to overlap the lower surface of the lens barrel 414 in the direction of an optical axis. The damper member 2319 may be positioned to face the lower surface of the lens barrel 414. The distance from the optical axis of the lens barrel 414 to the damper member 2319 may be smaller than the distance from the optical axis to the inner surface of the opening 211 of the base 210.

The height of the damper member 2319 may be greater than the height of the base member 2311. The upper surface of the damper member 2319 may be positioned higher than the upper surface of the base member 2311. The damper member 2319 may have a shape that protrudes from the upper surface of the base member 2311. For example, when looking at the cross-section of the holder 2310, the upper surface of the damper member 2319 may be positioned higher than the upper surface of the base member 2311. Accordingly, even if the lens barrel 414 collides with the damper member 2319, the holder 2310 and the filter 810 coupled thereto are not damaged.

The height of the damper member 2319 may be greater than the height of the base member 2311 corresponding to the first recessed part 2312. Accordingly, even if the damper member 2319 is positioned in the first recessed part 2312, the upper part of the damper member 2319 may be exposed from the base member 2311. **In** addition, the damper member 2319 is positioned to be spaced apart from the side wall of the first recessed part 2312 and may be coupled with the seating member 2314. Since the seating member 2314 having greater rigidity and the damper member 2319 are coupled, even if the lens barrel 414 collides with the damper member 2319, the base member 2311 and the filter 810 coupled therewith are not damaged.

A first groove 2420 may be formed on the upper surface of the damper member 2319. The first groove 2420 may be formed by being recessed into the upper surface of the damper member 2319. The first groove 2420 may be formed in a cross (+) shape on the upper surface of the damper member 2319. The first groove 2420 may facilitate attachment/detachment when in contact with the lower surface of the lens barrel 414. The first groove 2420 may serve to partition the upper surface of the damper member 2319 so that the damper member 2319 secures a contact area with the lower surface of the lens barrel 414 while being easily attached/detachable. The first groove 2420 may be formed in various shapes, such as a circular shape or a star shape recessed into the center of the upper surface.

The outer surface of the damper member 2319 may be formed with a second groove 2421. The second groove 2421 may be formed by being recessed into the outer surface of the damper member 2319. The second groove 2421 may be a region for being inserted and placed into the hole 2316 of the seating member 2314. When the damper member 2319 is inserted into the hole 2316 of the seating member 2314, it may be fixed by the second groove 2421.

Hereinafter, with reference to FIG. 11, the coupling process and coupled configuration of the base member 2311, the seating member 2314, and the damper member 2319 constituting the holder 2310 will be described.

First, a damper member 2319 can be inserted into the hole 2316 of the seating member 2314. Thereafter, with the damper member 2319 positioned in the hole 2316 of the seating member 2314, the base member 2311 can be injected by inserting it into an injection mold. The base member 2311 can be insert-molded with the seating member 2314 and the damper member 2319 inserted into the injection mold. Each component forming the holder 2310 can be formed by being coupled, in addition to being formed by injection molding.

The base member 2311 may be injection molded to partially surround the seating member 2314. The base member 2311 may be formed to surround the outer edge of the seating member 2314 and expose the inner opening direction. The upper surface of the base member 2311 and the upper surface of the seating member 2314 may be arranged to form a step. The upper surface of the seating member 2314 may be arranged lower than the upper surface of the base member 2311.

A filter 610 may be arranged on an upper surface of the seating member 2314. The filter 610 may be arranged to cover an opening of the seating member 2314. When the filter 610 is arranged on an upper surface of the seating member 2314, an outer surface of the filter 610 may be arranged to face an inner surface of the base member 2311. A length of a step in the direction of an optical axis between the base member 2311 and the seating member 2314 may be formed to correspond to a thickness of the filter 610. A length of a step in the direction of an optical axis between the base member 2311 and the seating member 2314 may be greater than or equal to a thickness of the filter 610.

The inner surface of the base member 2311 can be connected to the upper surface of the seating member 2314. The angle formed by the inner surface of the base member 2311 and the upper surface of the seating member 2314 can be vertical. The angle formed by the inner surface of the base member 2311 and the upper surface of the seating member 2314 can be an acute angle or an obtuse angle.

The first recessed part 2312 of the base member 2311 may be formed to be spaced apart from the damper member 2319. The damper member 2319 may be arranged to be spaced apart from the inner surface of the first recessed part 2312 of the base member 2311. A spaced space may be formed between the damper member 2319 and the first recessed part 2312 of the base member 2311. In order to absorb and cushion shock when colliding with the lower surface of the lens barrel 414, a free space may be formed between the damper member 2319 and the first recessed part 2312 in which the damper member 2319 can expand.

FIG. 13 is a perspective view illustrating a portable terminal 200A according to an embodiment, and FIG. 14 is a configuration diagram illustrating the portable terminal 200A illustrated in FIG. 13.

Referring to FIGS. 13 and 14, a portable terminal 200A (hereinafter referred to as "terminal") may include a body 850, a wireless communication part 710, an A/V input part 720, a sensing part 740, an input/output part 750, a memory part 760, an interface part 770, a controller 780, and a power supply part 790.

The body 850 illustrated in FIG. 13 is in the form of a bar, but is not limited thereto, and may have various structures such as a slide type, folder type, swing type, or swirl type in which two or more sub-bodies are connected to enable relative movement.

The body 850 may include a case (casing, housing, cover, or the like) forming the outer appearance. For example, the body 850 may be divided into a front case 851 and a rear case 852. Various electronic components of the terminal may be built into the space formed between the front case 851 and the rear case 852.

The wireless communication part 710 may be configured to include one or more modules that enable wireless communication between the terminal 200A and the wireless communication system or between the terminal 200A and the network in which the terminal 200A is located. For example, the wireless communication part 710 may be configured to include a broadcast reception module 711, a mobile communication module 712, a wireless Internet module 713, a short-range communication module 714, and a location information module 715.

The A/V (Audio/Video) input part 720 is for inputting audio signals or video signals and may include a camera 721 and a microphone 722, or the like

The camera 721 may include a camera module 200 according to an embodiment.

The sensing part 740 can detect the current state of the terminal 200A, such as the open/close state of the terminal 200A, the position of the terminal 200A, whether the user is in contact, the orientation of the terminal 200A, acceleration/deceleration of the terminal 200A, and generate a sensing signal to control the operation of the terminal 200A. For example, if the terminal 200A is in the form of a slide phone, the sensing part can sense whether the slide phone is open or closed. In addition, the sensing part is in charge of sensing functions related to whether power is supplied by the power supply part 790, whether the interface part 770 is connected to an external device, and the like.

The input/output part 750 is for generating input or output related to vision, hearing, or touch. The input/output part 750 can generate input data for controlling the operation of the terminal 200A and can also display information processed in the terminal 200A.

The input/output part 750 may include a key pad part 730, a display module 751, an audio output module 752, and a touch screen panel 753. The key pad part 730 may generate input data by key pad input.

The display module 751 may include a plurality of pixels whose colors change according to an electrical signal. For example, the display module 751 may include at least one of a liquid crystal display, a thin film transistor-liquid crystal display, an organic light-emitting diode, a flexible display, and a 3D display.

The audio output module 752 can output audio data received from the wireless communication part 710 in a call signal reception mode, a call mode, a recording mode, a voice recognition mode, a broadcast reception mode, or the like, or output audio data stored in the memory part 760.

The touch screen panel 753 can convert a change in electrostatic capacitance resulting from a user's touch on a specific area of the touch screen into an electrical input signal.

The memory part 760 may store programs for processing and controlling the controller 780, and may temporarily store input/output data (for example, phone book, messages, audio, still images, photographs, videos, or the like). For example, the memory part 760 may store images captured by the camera 721, such as photographs or videos.

The interface part 770 serves as a passage connecting to an external device connected to the terminal 200A. The interface part 770 receives data from an external device, supplies power, and transmits it to each component inside the terminal 200A, or allows data inside the terminal 200A to be transmitted to an external device. For example, the interface part 770 may include a wired/wireless headset port, an external charger port, a wired/wireless data port, a memory card port, a port for connecting a device equipped with an identification module, an audio I/O (Input/Output) port, a video I/O (Input/Output) port, and an earphone port.

The controller 780 can control the overall operation of the terminal 200A. For example, the controller 780 can perform related control and processing for voice calls, data communications, video calls, or the like

The controller 780 may be equipped with a multimedia module 781 for multimedia playback. The multimedia module 781 may be implemented within the controller 180 or may be implemented separately from the controller 780.

The controller 780 can perform pattern recognition processing to recognize handwriting input or drawing input performed on the touch screen as characters and images, respectively.

The power supply part 790 can supply power required for the operation of each component by receiving external power or internal power under the control of the controller 780.

Those skilled in the art related to the present embodiment will understand that the above-described description can be implemented in a modified form without departing from the essential characteristics thereof. Therefore, the disclosed methods should be considered from an illustrative rather than a restrictive perspective. The scope of the present disclosure is indicated by the claims, not the above description, and all differences within the scope equivalent thereto should be interpreted as being included in the present disclosure.

## Claims

1. A camera module comprising:
a substrate;
a base disposed on the substrate and comprising an opening;
a lens barrel disposed on the substrate and the opening of the base;
a holder disposed on the substrate and within the opening of the base; and
a filter coupled to the holder,
wherein the holder comprising a damper member disposed at a position overlapping the lowermost surface of the lens barrel in the direction of the optical axis.

2. The camera module of claim 1,
wherein the holder comprises a seating member to which the filter is coupled and a base member arranged on the outside of the seating member,
wherein the seating member comprises a protrusion protruding from an outside surface and a hole formed in the protrusion, and
wherein the damper member is arranged in the hole of the seating member.

3. The camera module of claim 2,
wherein the base member comprises a first recessed part that is recessed into the outer surface, and
wherein the damper member is arranged within the first recessed part and spaced apart from the inner wall of the first recessed part.

4. The camera module of claim 2,
wherein the upper surface of the damper member is positioned higher than the upper surface of the base member.

5. The camera module of claim 2,
wherein the height of the damper member is greater than the height of the base member.

6. The camera module of claim 1, further comprising:
a cover member formed on the base and accommodating the lens barrel, the holder, and the filter,
wherein the cover member is directly coupled to the base and not directly coupled to the holder.

7. The camera module of claim 1,
wherein the outer surface of the holder and the inner surface of the opening of the base are spaced apart from each other.

8. The camera module of claim 1,
wherein the distance from the optical axis of the lens barrel to the damper member is smaller than the distance from the optical axis to the inner surface of the opening of the base.

9. The camera module of claim 1, further comprising:
a housing disposed on the base; and
a bobbin disposed inside the housing,
wherein the bobbin comprises a stopper facing a part of the base on a lower surface.

10. The camera module of claim 9,
wherein the distance from the optical axis of the lens barrel to the stopper in the direction perpendicular to the optical axis is greater than the distance from the optical axis to the damper member.
